# EUROPÄISCHE PATENTANMELDUNG

(11) **EP 2 554 497 A1**
(43) Veröffentlichungstag der Anmeldung: **06.02.2013**
(21) Anmeldenummer: 12177290.9
(22) Anmeldetag: 20.07.2012
(51) Int. Cl.: B65G 9/00

(54) **Fördergutträger für eine Hängeförder- einrichtung**

(30) Priorität: 02.08.2011 DE 102011080280
(71) Anmelder: RSL Logistik GmbH & Co. KG, 86899 Landsberg (DE)
(72) Erfinder:
(74) Vertreter: Tiesmeyer, Johannes

(57) **Zusammenfassung**

Die Erfindung betrifft einen Fördergutträger für eine Hängefördereinrichtung, umfassend
- wenigstens einen Trägerkörper (3) mit einem zentralen Rumpfabschnitt (5),
- zwei an entgegengesetzten Seiten des zentralen Rumpfabschnittes angeordnete, um eine gemeinsame Drehachse (7) drehbare und zur hängenden Abstützung des Förderguttägers (1) an einer Führungsschiene der Hängefördereinrichtung vorgesehene Laufrollen (11) und
- eine an dem Trägerkörper (3) angeordnete Förderguthalteeinrichtung (8; 47) zur Aufnahme von zu transportierendem Fördergut, dadurch gekennzeichnet,
dass an dem Trägerkörper (3) zwei starre Achsstummel (9) vorhanden sind, die koaxial zu der Drehachse (7) der Laufrollen (11) in entgegensetzte Richtungen von dem zentralen Rumpfabschnitt (5) nach außen abstehen, und dass die Laufrollen (11) mittels eines jeweiligen Drehlagers (12), insbesondere Wälzlagers, auf den Achsstummeln (5) unabhängig voneinander drehbar gelagert sind.

## Beschreibung

Die Erfindung betrifft einen Fördergutträger für eine Hängefördereinrichtung, der wenigstens einen Trägerkörper mit einem zentralen Rumpfabschnitt und zwei an entgegengesetzten Seiten davon angeordnete, um eine gemeinsame Drehachse drehbare und zur hängenden Abstützung des Fördergutträgers an einer Führungsschiene der Hängefördereinrichtung vorgesehene Laufrollen aufweist, wobei eine Förderguthalteeinrichtung an dem Trägerkörper angeordnet ist.

Ein Fördergutträger der vorstehend genannten Art ist z. B. aus der DE 198 16 688 A1 oder der EP 0 623 497 B1 bekannt. Bei diesen bekannten Fördergutträgern handelt es sich um sog. Bügelträger zum Transport von an Kleiderbügeln hängenden Kleidungsstücken in einer Hängefördereinrichtung. Der Bügelträger ist im Förderbetrieb mit einer von zwei symmetrisch zu seiner vertikalen Mittenebene von dem Rumpfabschnitt des Trägerkörpers abstehenden Laufrollen an einer Führungsschiene der betreffenden Fördereinrichtung seitlich angehängt, wobei die Laufrolle an einer Lauffläche der Führungsschiene zur Bewegung in Schienenlängsrichtung geführt ist. Unterhalb der Laufrollen stehen symmetrisch zu der vertikalen Längs-Mittenebene zwei starre Vorsprünge seitlich von dem Rumpfabschnitt des Trägerkörpers ab, deren nach außen weisende Flächen als Reibflächen für einen Reibbandantrieb ausgebildet sind. Die jeweils der Führungsschiene zugewandte Reibfläche steht im Förderbetrieb mit einem Reibband in Antriebsverbindung, das in einer Reibbandführung der Führungsschiene in Schienenlängsrichtung verläuft. Das längs der Führungsschiene bewegte Reibband nimmt den Fördergutträger über die reibschlüssige Kopplung zwischen Reibfläche und Reibband mit, wobei die an der Führungsschiene geführte Laufrolle des Fördergutträgers an der Lauffläche der Führungsschiene abrollt.

Bei den bisher bekannten Fördergutträgern der hier betrachteten Art sind die Laufrollen auf einer gemeinsamen Welle drehfest angeordnet, welche mittels eines Wälzlagers im Rumpfabschnitt des Trägerkörpers drehbar gelagert ist und die gemeinsame Drehachse der Laufrollen definiert.

Aus der EP 2 125 581 B1 ist ein weiterer gattungsgemäßer Fördergutträger bekannt, welcher zwei Trägerkörper aufweist, die an ihrem unteren Ende durch eine Förderguthalteeinrichtung zur Aufnahme von zu transportierendem Fördergut verbunden sind. Auch bei dem letztgenannten Fördergutträger sind die Laufrollen jedes Trägerkörpers an einer gemeinsamen Welle vorgesehen, die im Rumpfabschnitt des Trägerkörpers mittels eines Kugellagers drehbar gelagert ist.

Der Erfindung liegt die Aufgabe zugrunde, einen Fördergutträger der eingangs genannten Art bereitzustellen, der kostengünstig herstellbar ist und ein verbessertes Laufverhalten im Förderbetrieb in einer Hängefördereinrichtung aufweist als die oben erwähnten Fördergutträger nach dem Stand der Technik.

Zur Lösung dieser Aufgabe wird ein Fördergutträger mit den eingangs genannten Merkmalen vorgeschlagen, der dadurch gekennzeichnet ist, dass an dem Trägerkörper zwei starre Achsstummel vorhanden sind, die koaxial zu der Drehachse der Laufrollen in entgegengesetzte Richtungen von dem zentralen Rumpfabschnitt nach außen abstehen, und dass die Laufrollen mittels eines jeweiligen Drehlagers, insbesondere Wälzlagers auf den Achsstummeln unabhängig voneinander drehbar gelagert sind.

Bei dem erfindungsgemäßen Fördergutträger sind die Laufrollen nicht mehr durch eine gemeinsame Welle zur gemeinsamen Drehung zwangsgekoppelt, so dass sich Störungen der Drehung einer Rolle nicht auf die Drehung der anderen Rolle übertragen können. Die im normalen Förderbetrieb jeweils nicht an der Führungsschiene der Hängefördereinrichtung abgestützte Laufrolle wird sich bei dem Fördergutträger nach der Erfindung normalerweise gar nicht mitdrehen. Diese Entkopplung der Drehung der einen Rolle von der Drehung der anderen Rolle hat zu einem verbesserten Laufverhalten der Fördergutträger in verschiedenen kritischen Betriebssituationen geführt.

Der Fördergutträger ist in besonders einfacher und kostengünstiger Weise herstellbar, wenn die Achsstummel materialschlüssig einstückig mit dem Rumpfabschnitt ausgebildet werden, dies vorzugsweise als Kunsttoff-Spritzgussteil. Bei einem solchen Kunststoff-Spritzgussteil kann jeder Achsstummel auch auf einfache Weise mit einem oder mehreren radialen Vorsprüngen oder Ausnehmungen ausgestaltet werden, die als Schnappsicherungsmittel für die auf die Achsstummel aufgesteckten Laufrollen dienen können.

Gemäß einer Ausführungsform der Erfindung sind die Achsstummel und der Rumpfabschnitt von einem sich längs der Drehachse erstreckenden Loch durchsetzt, in dem optional ein vorzugsweise stählerner Stabilisierungsstift aufgenommen ist. Eine solche Ausführungsform ermöglicht es, einen im Übrigen im Wesentlichen aus Kunststoff hergestellten Fördergutträger im Bereich der Laufrollendrehachse auszusteifen, so dass der Fördergutträger auch für den Transport von schwerem Fördergut heranziehbar ist.

Vorzugsweise haben die Laufrollen jeweils einen axial äußeren kreiszylindrischen Abschnitt und einen daran angrenzenden konischen Abschnitt, wobei der kreiszylindrische Abschnitt eine zentrale Ausnehmung hat, in dem ein jeweiliges Wälzlager passend aufgenommen ist. Vorzugsweise sitzen die Wälzlager im Presssitz in der zentralen Ausnehmung oder/und sind durch eine Schnappsicherung darin gesichert.

Als Drehlager kommen vorzugsweise Kugellager in Frage. Standardkugellager sind preisgünstig verfügbar und bieten eine extrem reibungsarme Drehlagerung. In alternativen Ausgestaltungen der Erfindung können auch andere Wälzlagertypen Verwendung finden. Es ist auch nicht ausgeschlossen, dass als Drehlager Gleitlager verwendet werden.

Gemäß einer Ausführungsform der Erfindung ist der Fördergutträger als sog. Bügelträger ausgebildet und weist an seinem unteren Ende einen Haken zum Anhängen von Fördergut, z. B. Kleiderbügeln auf. Der untere Haken ist vorzugsweise materialschlüssig integral und insbesondere im Spritzgussverfahren mit dem Rumpfabschnitt des Trägerkörpers hergestellt worden.

In alternativen Ausführungsformen kann anstelle eines Hakens auch eine anders gestaltete Förderguthalteeinrichtung an dem Trägerkörper vorgesehen sein. Solche Förderguthalteeinrichtungen können z. B. Spanneinrichtungen mit Federhaltesystemen zur Aufnahme des Fördergutes umfassen.

Vorzugsweise ist der Trägerkörper in Bezug auf eine mittig in dem zentralen Rumpfabschnitt liegende und zur Drehachse der Laufrollen orthogonale Symmetrieebene symmetrisch, so dass er unabhängig davon, mit welcher seiner beiden Laufrollen er an der Führungsschiene abgestützt ist, gleiches Lauf- und Antriebsverhalten im Förderbetrieb haben sollte.

Bei einer weiteren Ausführungsform eines Fördergutträgers nach der Erfindung sind zwei Trägerkörper der vorstehend erläuterten Art vorgesehen, die an ihren - im Förderbetrieb - unteren Enden durch die Förderguthalteeinrichtung verbunden sind. Diese Förderguthalteeinrichtung zur Aufnahme von zu transportierendem Fördergut kann z. B. einen Stangenabschnitt, etwa eine Art Kleiderstange, zum Anhängen von Fördergut aufweisen.

Vorzugsweise ist jeder der Trägerkörper um eine zur Drehachse seiner Laufrollen orthogonale und im normalen Förderbetrieb i. W. senkrechte Drehachse drehbar mit der Förderguthalteeinrichtung verbunden. Dies ermöglicht eine verspannungsfreie Durchfahrt des Fördergutträgers auch durch relativ enge Kurven der Führungsschiene.

Zwei Ausführungsbeispiele der Erfindung werden nachfolgend unter Bezugnahme auf die Zeichnungen näher erläutert.
- Fig. 1: zeigt als erstes Ausführungsbeispiel der Erfindung einen sog. Bügelträger in einer perspektivischen Ansicht.
- Fig. 2: zeigt den Bügelträger aus Fig. 1 in einer Seitenansicht.
- Fig. 3: zeigt den Bügelträger in einer Schnittdarstellung mit der in Fig. 2 bei A-A gekennzeichneten Schnittebene.
- Fig. 4: zeigt einen als Spritzguss-Kunststoffteil einstückig hergestellten Trägerkörper des Bügelträgers aus Fig. 1 - 3 in einer perspektivischen Darstellung.
- Fig. 5: zeigt den Bügelträger in einer perspektivischen Explosionsdarstellung.
- Fig. 6 und 7: zeigen als zweites Ausführungsbeispiel der Erfindung einen als Trolley mit zwei Trägerkörpern ausgebildeten Fördergutträger in perspektivischen Darstellungen aus zwei entgegengesetzten Blickrichtungen.
- Fig. 8: zeigt eine Explosionsdarstellung des zweiten Ausführungsbeispiels.

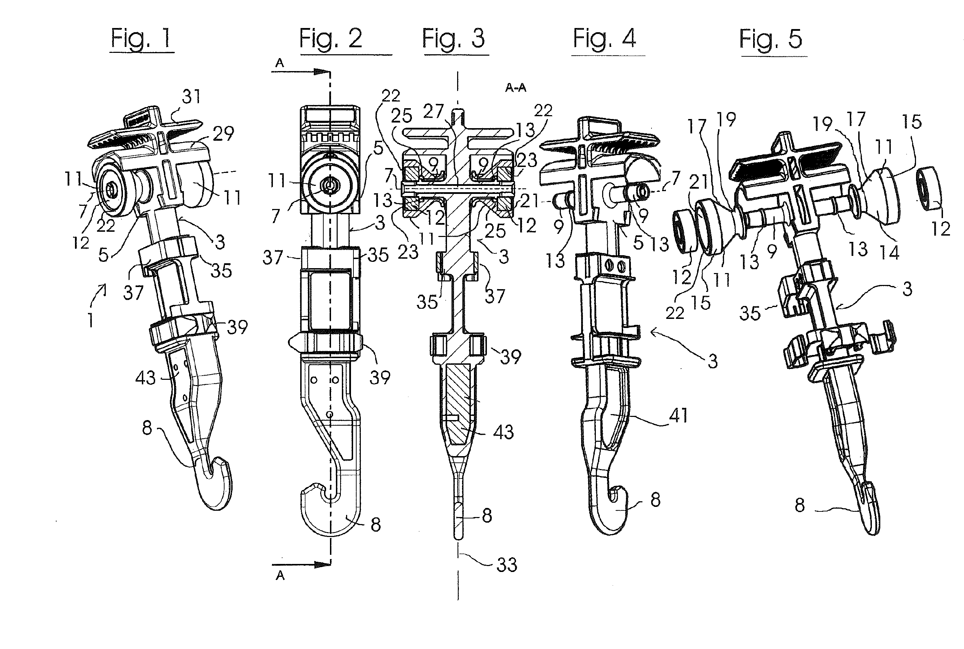

Der als Bügelträger zum Transport von einzelnen Kleiderbügeln vorgesehene Fördergutträger 1 gemäß Fig. 1 - 5 hat einen Trägerkörper 3 mit einem zentralen Rumpfabschnitt 5 und mit einem unteren Hakenabschnitt 8, der als Förderguthalteeinrichtung zur Aufnahme des Hakens eines Kleiderbügels vorgesehen ist. Von dem zentralen Rumpfabschnitt 5 des Trägerkörpers 3 stehen koaxial zu einer Rollendrehachse 7 zwei starre Achsstummel bzw. Achszapfen 9 ab. Auf jedem der beiden Achsstummel 9 sitzt eine jeweilige Laufrolle 11, wobei die Laufrollen 11 mittels Kugellager 12 auf den Achsstummeln 9 gelagert sind, so dass sie um die Drehachse 7 gedreht werden können. Die Laufrollen 11 sind unabhängig voneinander drehbar gelagert, so dass sie sich im Förderbetrieb nicht gegenseitig in ihrem Drehverhalten beeinflussen können.

Fig. 4 zeigt den Trägerkörper 3 als einstückiges Spritzgussteil mit dem zentralen Rumpfabschnitt 5, den Achsstummeln 9 und dem Hakenabschnitt 8. Ein solches Kunststoff-Spritzgussteil kann in Massenproduktion kostengünstig hergestellt werden.

Die Achsstummel 9 weisen als Schnappsicherungselement für die Laufrollen 11 einen jeweiligen Ringwulst 13 am Umfang auf.

Die Laufrollen 11 haben jeweils einen Laufrollenkörper 14 mit einem axial äußeren zylindrischen Abschnitt 15, einem daran angrenzenden konischen Abschnitt 17 und einem daran anschließenden axial inneren Rillenabschnitt 19. Ferner hat jede Laufrolle 11 ein im Durchmesser abgestuftes, axiales Durchgangsloch 21 (vgl. Fig. 3). In dem kreiszylindrischen Abschnitt 15 der Laufrolle 11 bildet das Durchgangsloch 21 einen Bereich vergrößerten Durchmessers 23 als zentrale Ausnehmung zur Aufnahme des Kugellagers 12. Das Kugellager 12 ist in die Aufnahme 23 eingepresst worden, so dass sie darin passend fixiert ist. Ein kleiner stirnseitiger Innenflansch 22 des Laufrollenkörpers 14 bildet eine axial äußere Schnappsicherung für das Kugellager 12 in der zentralen Ausnehmung 23.

An den Bereich 23 zur Aufnahme des Kugellagers 12 schließt sich ein Bereich 25 kleineren Durchmessers als zu dem Ringwulst 13 des Achsstummels 9 komplementäres Schnappsicherungselement der Laufrolle 11 an. Fig. 3 lässt erkennen, dass die Ringwulste 13 in den Bereichen 25 der Laufrollen 11 aufgenommen sind.

Bei der Montage der Laufrollen 11 werden zunächst die Kugellager 12 in die Aufnahmen 23 eingepresst. Die so präparierten Laufrollen 11 werden dann von axial außen auf die Achsstummel 9 aufgedrückt, wobei die Ringwulste 13 der Achsstummel in Schnappsitz mit den Lochbereichen 25 der Laufrollen 11 kommen. Die Laufrollen 11 sind dann an dem Trägerkörper 3 fixiert, wobei sie um die Drehachse 7 gedreht werden können.

Durch die Achsstummel 9 und durch den zentralen Rumpfabschnitt 5 des Trägerkörpers 3 hindurch erstreckt sich ein Durchgangsloch 27 koaxial zur Drehachse 7. Dieses Durchgangsloch 27 dient zur optionalen Aufnahme eines zylindrischen Stiftes aus einem härteren Material, etwa aus Stahl.

Der Trägerkörper weist an seinem oberen Ende Schutzdachabschnitte 29 für die Laufrollen 11 und darüber angeordnete, nach außen abstehende Wandabschnitte 31 auf, an denen der Fördergutträger 1 von bestimmten Transporteinrichtungen innerhalb einer (nicht gezeigten) Hängefördereinrichtung in Eingriff genommen werden kann.

Unterhalb der Laufrollen 11 stehen symmetrisch zu der vertikalen Längs-Mittenebene 33 des Trägerkörpers 3 zwei starre Vorsprünge seitlich von dem Trägerkörper ab, auf denen Reibclips 35 im Schnappsitz angeordnet sind. Die Reibclips 35 haben seitliche Außenflächen 37, die im Förderbetrieb des Fördergutträgers 1 in einer (nicht gezeigten) Hängefördereinrichtung zur Kopplung mit einem Reibband vorgesehen sind.

Im normalen Förderbetrieb hängt der Fördergutträger 1 mit jeweils einer Laufrolle 11 an einer Führungsschiene einer betreffenden Hängefördereinrichtung, wobei nur der Reibclip 35, der auf der Seite der eingehängten Laufrolle 11 liegt, mit einem betreffenden Reibband der Hängefördereinrichtung in Kontakt kommt.

Das längs der Führungsschiene bewegte Reibband nimmt den betreffenden Fördergutträger 1 über die reibschlüssige Kopplung zwischen Reibfläche 37 und Reibband mit, wobei die an der Führungsschiene geführte Laufrolle 11 des Fördergutträgers 1 an einer Lauffläche der Führungsschiene abrollt.

Der Fördergutträger 1 ist für den Förderbetrieb in einem staufähigen Powerand-Free-Förderer geeignet, bei dem eine Gruppe von gleichartigen Fördergutträgern 1 in einem Staubereich bei weiterlaufendem Reibband aufgestaut werden kann. Um zu vermeiden, dass die Reibflächen 37 der im Stau befindlichen Fördergutträger 1 an dem weiterlaufenden Reibband schleifen, ist eine Trenneinrichung 39 zum zeitweisen Lösen der Antriebsverbindung zwischen Reibband 35 und Reibfläche 37 vorgesehen. Zur Erläuterung der Funktionsweise und des Aufbaus einer solchen Trenneinrichtung 39 wird auf die EP 0 623 497 B1 und auf die DE 198 16 688 A1 verwiesen.

Unterhalb der Trenneinrichtung 39 hat der Trägerkörper 3 eine Aufnahme 41 für ein Belastungsgewicht 43, z. B. aus Metall, etwa Zink. Das Belastungsgewicht sorgt dafür, dass der Schwerpunkt des Fördergutträgers 1 bei vertikaler Ausrichtung gemäß Fig. 2 im Förderbetrieb möglichst weit unten liegt.

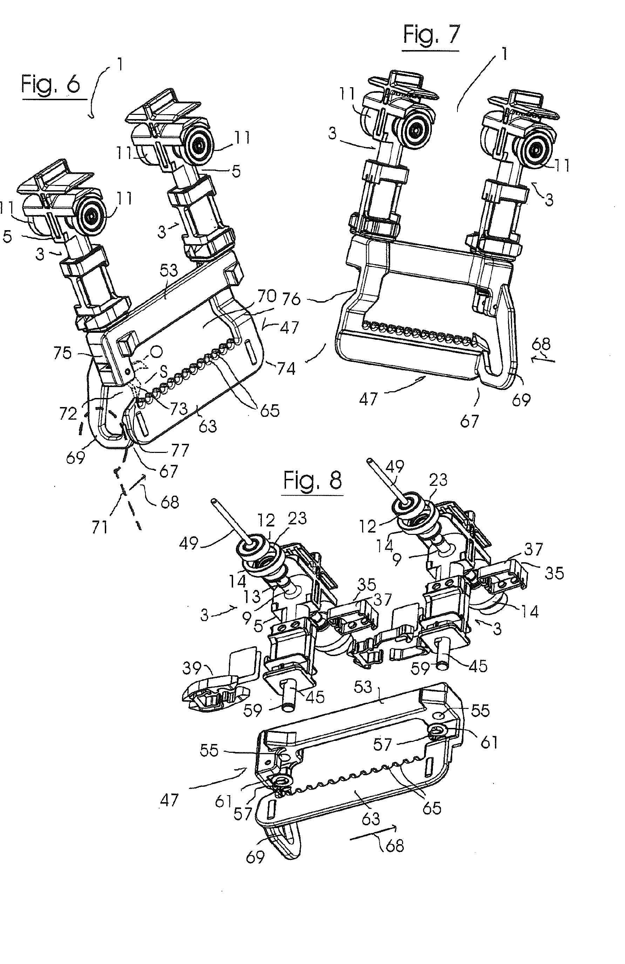

Der als zweites Ausführungsbeispiel der Erfindung gezeigte und als Trolley ausgebildete Fördergutträger 1 gemäß den Fig. 6 - 8 hat zwei gleichartige Trägerkörper 3 in Hintereinander-Anordnung. Die Trägerkörper 3 dieses zweiten Ausführungsbeispiels der Erfindung unterscheiden sich von dem Trägerkörper 3 des bereits erläuterten ersten Ausführungsbeispiels dadurch, dass sie keinen unteren Hakenabschnitt 8 aufweisen, sondern dafür einen jeweiligen Gelenkstift 45 zur drehgelenkigen Befestigung an einer gemeinsamen Förderguthalteeinrichtung 47.

Für gleiche Elemente und Komponenten der Ausführungsbeispiele wurden zu deren Kennzeichnung in den Figuren gleiche Bezugszeichen verwendet, so dass zum Verständnis des Aufbaus der Trägerkörper 3 in den Fig. 6 - 8 auf die Beschreibung des Trägerkörpers 3 des ersten Ausführungsbeispiels in den Fig. 1-5 verwiesen werden kann. Diesbezüglich ist noch hinzuzufügen, dass bei dem zweiten Ausführungsbeispiel ein jeweiliger Zylinderstift 49 zur Aussteifung des jeweiligen Trägerkörpers 3 im Rumpf- und Achsbereich vorgesehen ist.

Die Förderguthalteeinrichtung 47 weist einen oberen Verbindungsabschnitt 53 auf, der die beiden Trägerkörper 3 miteinander verbindet und Lagerlöcher 55 aufweist, in denen die Gelenkstifte 45 unabhängig voneinander drehgelenkig aufgenommen sind. An ihren unteren Enden sind die Gelenkstifte 45 mit Sicherungsringen 57 gegen axiales Herausrutschen aus den Löchern 55 gesichert. Die Sicherungsringe 57 greifen dabei in eine Umfangsnut 59 am unteren Ende der Gelenkstifte 45 ein. Ferner sind noch Beilagscheiben 61 vorgesehen, die oberhalb der Sicherungsringe 57 auf den Gelenkstiften 45 vorgesehen sind.

Im Wesentlichen parallel zu dem Verbindungsabschnitt 53 weist die Förderguthalteeinrichtung 47 einen stangenartigen Trägerabschnitt 63 mit einem Raster in Längsrichtung 68 des Fördergutträgers 1 hintereinander liegender Aufnahmekerben 65 auf, in denen Haken von Kleiderbügeln oder dgl. eingehängt werden können.

An einem ersten Längsende 67 des Stangenabschnitts 63 ist dieser durch einen - in Längsrichtung 68 des Stangenabschnittes 63 betrachtet - hakenförmigen Halter 69 mit dem Verbindungsabschnitt 53 verbunden. Der hakenförmige Halter 69 ist so geformt, dass der Haken eines Kleiderbügels von dem Ende 67 der Förderguthalteeinrichtung 47 her in Längsrichtung 68 des Stangenabschnittes 63 in den Zwischenraum 70 zwischen dem Verbindungsabschnitt 53 und dem Stangenabschnitt 63 eingeführt werden kann, ohne von der Seite her über den Stangenabschnitt 63 hinweggehoben werden zu müssen. In Fig. 6 ist dieses longitudinale Einführen eines Kleiderbügelhakens 71 in den Zwischenraum 70 schematisch angedeutet. Der spezielle Halter 69 ermöglicht somit ein erleichtertes Beladen des Fördergutträgers mit Kleiderbügeln oder dgl.

Optional kann eine Sicherungsklinke vorgesehen sein, wie sie in Fig. 6 bei 73 angedeutet ist. Diese Sicherungsklinke 73 ist an dem nach unten weisenden Schenkel 75 des Verbindungsabschnittes 53 schwenkbar gelagert, so dass sie in einer Schließstellung (S) den Durchgang 72 zu dem Zwischenraum 70 verschließt und in einer Öffnungsstellung (O) den Durchgang 72 freigibt, wobei die Sicherungsklinke 73 durch Schwerkraft oder ggf. Federkraft in Richtung zur Schließstellung (S) vorgespannt ist. Die Sicherungsklinke 73 kann durch leichten Druck von außen von der Schließstellung (S) in die Öffnungsstellung (O) z. B. mittels eines in den Durchgang 72 bewegten Kleiderbügels 71 verschwenkt werden. Sie kann jedoch nicht aus der Schließstellung (S) heraus in Richtung weg von dem Zwischenraum 70 verschwenkt werden. Diesbezüglich ist sie durch einen Sicherungsanschlag 77 verriegelt. Die Sicherungsklinke 73 verhindert somit, dass an dem Stangenabschnitt 63 hängende Kleiderbügel unbeabsichtigt durch den Durchgang 72 hindurch von dem Fördergutträger rutschen können.

Im Beispielsfall ist der an dem zweiten Längsende 74 vorgesehene Halter 76 zur Verbindung des Stangenabschnittes 63 mit dem Verbindungsabschnitt 53 anders geformt als der hakenförmige Halter 69. Selbstverständlich könnten die Halter 69 und 76 in anderen Ausführungsbeispielen auch im Wesentlichen gleiche Formen haben.

Bei Trolleys der in den Fig. 6 - 8 gezeigten Bauart sind die Förderguthalteeinrichtungen 47 gemäß einer bevorzugten Variante so gestaltet und dimensioniert, dass sie bei Aufeinandertreffen hintereinander längs einer Laufschiene bewegter Trolleys den Auftreffkontakt erfahren und wesentlich betreffende Auftreff- und Schubkräfte übernehmen und ableiten können, insbesondere auch als Kette einer größeren Anzahl in Reihe aneinander anliegender Trolleys.

Ferner ist noch darauf hinzuweisen, dass die Fördergutträger 1 nach der Erfindung vorzugsweise mit Kennzeichnungsmitteln, etwa RFID-Chips, Barcode-Label oder dgl. ausgestattet sind.

## Patentansprüche

1. Fördergutträger für eine Hängefördereinrichtung, umfassend
- wenigstens einen Trägerkörper (3) mit einem zentralen Rumpfabschnitt (5),
- zwei an entgegengesetzten Seiten des zentralen Rumpfabschnittes angeordnete, um eine gemeinsame Drehachse (7) drehbare und zur hängenden Abstützung des Förderguttägers (1) an einer Führungsschiene der Hängefördereinrichtung vorgesehene Laufrollen (11) und
- eine an dem Trägerkörper (3) angeordnete Förderguthalteeinrichtung (8; 47) zur Aufnahme von zu transportierendem Fördergut,
**dadurch gekennzeichnet,**
**dass** an dem Trägerkörper (3) zwei starre Achsstummel (9) vorhanden sind, die koaxial zu der Drehachse (7) der Laufrollen (11) in entgegensetzte Richtungen von dem zentralen Rumpfabschnitt (5) nach außen abstehen, und dass die Laufrollen (11) mittels eines jeweiligen Drehlagers (12), insbesondere Wälzlagers, auf den Achsstummeln (5) unabhängig voneinander drehbar gelagert sind.

2. Fördergutträger nach Anspruch 1, **dadurch gekennzeichnet, dass** der Rumpfabschnitt (5) und die Achsstummel (9) von einem einstückigen Kunststoff-Spritzgussteil gebildet sind.

3. Fördergutträger nach einem der vorhergehenden Ansprüche, **dadurch gekennzeichnet, dass** die Achsstummel (9) und der Rumpfabschnitt (5) von einem sich längs der Drehachse (7) erstreckenden Loch (27) durchsetzt sind, in dem ein vorzugsweise stählerner Stabilisierungsstift (49) aufgenommen ist.

4. Fördergutträger nach Anspruch 3, **dadurch gekennzeichnet, dass** der Stabilisierungsstift (49) aus Metall, insbesondere Stahl besteht.

5. Fördergutträger nach einem der vorhergehenden Ansprüche, **dadurch gekennzeichnet, dass** die Laufrollen (11) jeweils einen axial äußeren kreiszylindrischen Abschnitt (15) und einen daran angrenzenden konischen Abschnitt (17) aufweisen, wobei der kreiszylindrische Abschnitt (15) eine zentrale Ausnehmung (23) hat, in der ein Wälzlager (12) als Drehlager passend aufgenommen ist.

6. Fördergutträger nach Anspruch 5, **dadurch gekennzeichnet, dass** die Laufrollen (11) einen jeweiligen Laufrollenkörper (14) aus Kunststoff haben und dass das jeweilige Wälzlager (12) im Presssitz oder/und im Schnappsitz in der zentralen Ausnehmung (23) aufgenommen ist.

7. Fördergutträger nach einem der vorhergehenden Ansprüche, **dadurch gekennzeichnet, dass** die Drehlager (12) Kugellager sind.

8. Fördergutträger nach einem der vorhergehenden Ansprüche, **dadurch gekennzeichnet, dass** die Förderguthalteeinrichtung (7) einen am Trägerkörper (3) vorgesehenen unteren Haken (8) zum Anhängen von Fördergut aufweist.

9. Fördergutträger nach einem der vorhergehenden Ansprüche, **dadurch gekennzeichnet, dass** er Kopplungsmittel, insbesondere Reibkopplungsmittel (35) zur Ankopplung an ein Antriebsband einer betreffenden Hängefördereinrichtung aufweist.

10. Fördergutträger nach einem der vorhergehenden Ansprüche, **dadurch gekennzeichnet, dass** der Trägerkörper (3) in Bezug auf eine in dem zentralen Rumpfabschnitt (5) liegende und zur Drehachse der Laufrollen orthogonale Symmetrieebene (33) symmetrisch ist.

11. Fördergutträger nach einem der vorhergehenden Ansprüche, **dadurch gekennzeichnet, dass** er wenigstens zwei Trägerkörper (3) aufweist und dass die Trägerkörper (3) an ihren unteren Enden durch die Förderguthalteeinrichtung (47) verbunden sind.

12. Fördergutträger nach Anspruch 11, **dadurch gekennzeichnet, dass** die Förderguthalteeinrichtung (47) einen Stangenabschnitt (63) zum Anhängen von Fördergut aufweist.

13. Fördergutträger nach Anspruch 11 oder 12, **dadurch gekennzeichnet, dass** jeder Trägerkörper (3) um eine zur Drehachse (7) seiner Laufrollen orthogonale Drehachse drehbar mit der Förderguthalteeinrichtung (47) verbunden ist.
